# EUROPEAN PATENT APPLICATION

(11) **EP 4 624 666 A1**
(43) Date of publication of application: **01.10.2025**
(21) Application number: 24217085.0
(22) Date of filing: 03.12.2024
(51) Int. Cl.: E01F 3/00, B64F 1/22

(54) **MOVING MECHANISM AND VERTIPORT INCLUDING THE SAME**

(30) Priority: 27.03.2024 KR 20240041603
(71) Applicant: Hyundai Motor Company, Seoul 06797 (KR); Kia Corporation, Seocho-gu Seoul 06797 (KR)
(72) Inventor: CHUNG, Jae Hoon, Seoul (KR)
(74) Representative: Viering, Jentschura & Partner mbB Patent- und Rechtsanwälte

(57) **Abstract**

A vertiport includes a mobility apparatus stop, and a moving mechanism provided on the mobility apparatus stop. The moving mechanism includes a support rotatably provided on the mobility apparatus stop, a plurality of extension joints connected to the support, and a takeoff and landing deck provided on an outermost extension j oint among the plurality of extension joints.

## Description

### CROSS-REFERENCE TO RELATED APPLICATION(S)

This application claims benefit of priority to Korean Patent Application No. 10-2024-0041603 filed on March 27, 2024 in the Korean Intellectual Property Office, the disclosure of which is incorporated herein by reference in its entirety.

### TECHNICAL FIELD

The present disclosure relates to a moving mechanism and a vertiport including the same.

### BACKGROUND

Typical daily means of transportation (e.g., cars, buses, trains, etc.) move on the ground, and thus it is easy to provide stops or platforms on the ground.

However, with the emergence of urban air mobility (UAM), it has become urgently necessary to provide a stop for vertical takeoff and landing mobility apparatus. Stops for UAM may be needed in dense urban areas, and if the stops are installed on narrow rooftops of buildings, there may be a lot of concern about accidents due to limited space. Monitoring and management of mobility apparatus taking off and landing at mobility apparatus stops would be continuously required, and resources may be unnecessarily wasted.

Accordingly, there is a demand for a mobility apparatus management means at mobility apparatus takeoff and landing sites.

The matters described in this Background section are only for enhancement of understanding of the background of the disclosure, and should not be taken as acknowledgement that they correspond to prior art already known to those skilled in the art.

### SUMMARY

The following summary presents a simplified summary of certain features. The summary is not an extensive overview and is not intended to identify key or critical elements.

Systems, apparatuses, and methods are described for a moving mechanism and vertiport. A vertiport may comprise: a mobility apparatus stop; and a moving mechanism provided on the mobility apparatus stop. The moving mechanism may comprise: a support rotatably connected to the mobility apparatus stop; a plurality of extension joints connected in series to the support; and a takeoff and landing deck provided on an outermost extension j oint of the plurality of extension joints.

A moving mechanism for a vertiport may comprise a plurality of extension joints; and a takeoff and landing deck provided on an outermost extension joint among the plurality of extension joints. The plurality of extension joints may be provided to be mutually rotatable, and configured to fold to form a combined shape corresponding to a shape of the takeoff and landing deck.

These and other features and advantages are described in greater detail below.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a bird's eye view of a vertiport according to an example;
FIG. 2 is a combined perspective view of a moving mechanism according to an example;
FIG. 3 is an exploded perspective view of a moving mechanism according to an example;
FIG. 4 is a side view of a moving mechanism according to an example;
FIG. 5 is a reference diagram illustrating an example of a drive motor and a gearbox provided in a moving mechanism according to an example;
FIG. 6 is a reference diagram illustrating an example of a wheel provided on a lower surface of a moving mechanism according to an example;
FIGS. 7 and 8 are reference diagrams illustrating an unfolding moving mechanism according to an example; and
FIGS. 9 to 11 are reference diagrams illustrating a moving mechanism according to another example.

### DETAILED DESCRIPTION

Since the present disclosure may make various changes and have various examples, specific examples will be illustrated in the drawings and described in detail. However, this is not intended to limit the present disclosure to specific examples, and should be understood to include all changes, equivalents, and substitutes included in the spirit and technical scope of the present disclosure.

Terms such as first, second, and the like may be used to describe various components, but the components should not be limited by the terms. The above terms are used only for the purpose of distinguishing one component from another. For example, a first component may be named a second component, and similarly, the second component may also be named a first component without departing from the scope of the present disclosure. The term 'and/or' includes any combination of a plurality of related stated items or any of a plurality of related stated items.

Terms such as "unit," "part," "portion," and the like may be used to describe various components, but the components should not be limited by the terms. The above term may refer to not only a physically/visually distinct configuration, but also a term that describes the function or configuration of the corresponding part even if the distinction/division is not clear.

The terms used in this application are only used to describe specific examples and are not intended to limit the present disclosure. Singular expressions include plural expressions unless the context clearly dictates otherwise. In this application, terms such as "comprise," "include," "have," and the like are intended to designate the presence of features, numbers, steps, operations, components, parts, or combinations thereof described in the specification, and it should be understood that this does not exclude in advance the presence or addition of one or more other features, numbers, steps, operations, components, parts, or combinations thereof.

Unless otherwise defined, all terms used herein, including technical or scientific terms, have the same meaning as commonly understood by a person of ordinary skill in the technical field to which the present disclosure pertains. Terms defined in commonly used dictionaries should be interpreted as having meanings consistent with the meanings they have in the context of the relevant technology, and unless explicitly defined in this application, it is not to be interpreted in an idealistic or overly formal sense.

A mobility device (e.g., aircraft) may move in a space related to land, underground, air, space, sea, and/or underwater, depending on the space in which it moves. Aboveground and/or underground mobility devices may be provided in the form of, for example, vehicles, robots, or the like. Air and space mobility devices are called air mobility, and for example, may be provided in the form of a typical fixed-wing or rotary-wing aircraft, the recently actively developed Advanced Air Mobility (AAM), Urban Air Mobility (UAM), unmanned aerial vehicles or drones, rockets, means of transportation mounted on artificial satellites, and the like. A sea or underwater mobility device may be, for example, a ship, a submarine, or the like. The mobility device is not limited to a specific space and may be a mobile body that may move through all of the above-mentioned spaces, for example, a mobile body that may move between multiple spaces. For example, the mobility device may be an amphibious vehicle, a flying vehicle, or the like.

In the description below, the terms "anterior," "posterior," "lateral," "front," "back," "up/down," "above," "upper," "top," "below," "lower," "bottom," "left/right," and the like, used in relation to direction, are defined based on the vehicle or body of the car. Also, or alternatively, terms such as "first," "second," and the like may be used to describe various components, but these components are not limited in order, size, location, or importance by terms such as first, second and the like, and are named only for the purpose of distinguishing one component from other components.

Hereinafter, examples will be described in more detail with reference to the attached drawings.

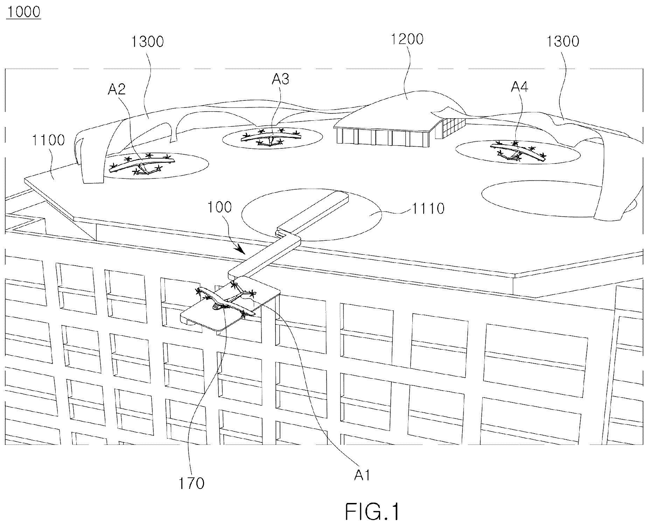

Referring to FIG. 1, a bird's eye view of a vertiport 1000 according to an example is illustrated.

The vertiport 1000 may be installed anywhere, including in a city center or outskirts, in/on a building, and/or on the ground. Additionally, or alternatively, a mobility apparatus stop 1100 of the vertiport 1000 may be provided as part of a building (e.g., a rooftop, a roof, or the like), and/or may be provided on the ground. For convenience of explanation, the mobility apparatus stop 1100 provided on the rooftop of a building is used as an example.

The mobility apparatus stop 1100 is a space where mobility apparatus may take off, land, and/or park. The mobility apparatus stop 1100 may be equipped with a waiting room 1200 where passengers may wait to use mobility apparatus and/or a hangar 1300 where mobility apparatus may be parked. FIG. 1 illustrates mobility apparatuses A2, A3, and A4 are parked (e.g., docked) in individual hangars 1300. Mobility apparatus A1 is no longer in the empty hangar 1300.

Additionally, or alternatively, the vertiport 1000 may include a moving mechanism 100 that may systematically manage mobility apparatus taking off and landing at the mobility apparatus stop 1100. The moving mechanism may significantly reduce or block the occurrence of accidents (e.g., relative to a vertiport without said moving mechanism).

The moving mechanism 100 may be provided with a takeoff and landing deck 170 on which a mobility apparatus may take off and/or land. The landing mobility apparatus A1 lands on the takeoff and landing deck 150 and then move from the takeoff and landing deck 150, so that the mobility apparatus may systematically move to the destination hangar 1300. For a mobility apparatus A1 taking off, the takeoff and landing deck 150 may move to/towards the hangar 1300 where the mobility apparatus A1 is located (e.g., empty hangar as illustrated in FIG. 1). The mobility apparatus A1 may move from the hangar 1300 to the upper part of the takeoff and landing deck 150, the takeoff and landing deck 150 may be systematically moved to a position to allow the mobility apparatus to take off. For example, the mobility apparatus A1 may be allowed to take off and/or land on the takeoff and landing deck 150 only if the takeoff and landing deck 150 is at a designated location.

The mobility apparatus stop 1100 may be provided in and/or on a building. Moreover, the moving mechanism 100 installed at the mobility apparatus stop 1100 may extend to outside of the building. For example, if the moving mechanism 100 is unfolded and/or extended, the takeoff and landing deck 150 may be and/or move up to the outside of the building.

A battery of the mobility apparatus A1 may be charged while placed on the takeoff and landing deck 150. The battery may be charged by connecting a charging jack 180 provided on the takeoff and landing deck 150. Also, or alternatively, charging of the battery may be implemented by accurately moving the mobility apparatus A1 to a predetermined position on the takeoff and landing deck 150 so that terminals of the battery are connected to charging terminals (e.g., of the charging jack 180) with a one-touch fastening method.

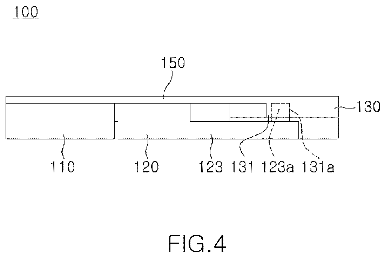

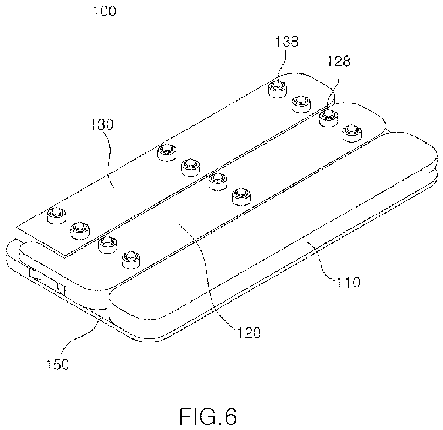

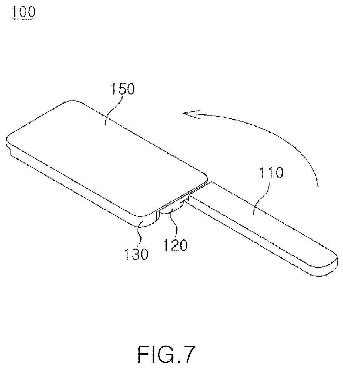

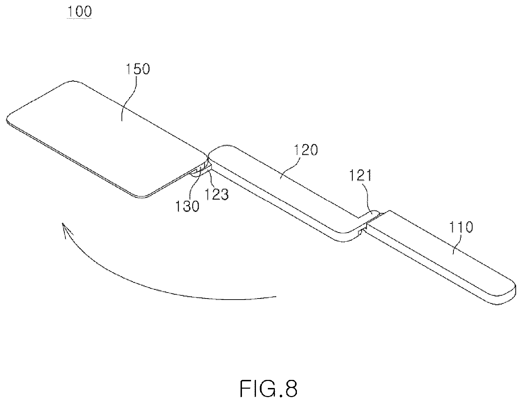

Referring to FIGS. 1 to 8, the vertiport 1000 according to an example, may include the mobility apparatus stop 1100 and the moving mechanism 100 provided on the mobility apparatus stop 1100. The moving mechanism 100 may include a support 1110 rotatably fixed to the mobility apparatus stop 1100, a plurality of extension joints 140 connected to the support 1110, and the takeoff and landing deck 150 provided on an outermost extension joint 130 of the plurality of extension joints 110,120, and 130.

The support 1110 may be rotatably fixedly installed at the mobility apparatus stop 1100. The support 1110 may serve as a support so that the moving mechanism 100 may rotate as a whole.

The extension joints may be provided as a plurality of joints, one of which, a first joint 110, may be fixed to the support 1110 (e.g., fixedly/non-rotateably connected to the support 1110), and remaining second joint 120 and third joint 130 (e.g., and so on) may be connected and configured to be sequentially rotated (relative to those adjacent in the sequence). In this example, a structure provided with three joints including the first to third joints 110, 120, and 130 is described, but the structure is not limited thereto, and as long as it is two or more extension joints, it may be applied to all.

The first joint 110 may be firmly fixed to the support 1110, such that the first joint 110 cannot rotate on its own (e.g., relative to the support 1110), and may rotate together with rotation of the support 1110.

The second joint 120 may be rotatably connected to the first joint 110, and the third joint 130 may be rotatably connected to the second joint 120. The first joint 110, the second joint 120, and the third joint 130 may all be provided with the same length (e.g., maximum dimension and/or distance between rotation points and opposite ends thereof).

Also, or alternatively, the outermost extension joint 130 of the plurality of extension joints 110,120,130 may be provided with the takeoff and landing deck 150.

In the plurality of extension joints 110,120,130, the lower surfaces of the second and third joints 120 and 130 except for the first j oint 110 coupled to the support 1110 may be provided in parallel. Also, or alternatively, a plurality of moving wheels 128 and 138 may be provided on the lower surfaces of the remaining second and third joints 120 and 130.

The lower surface of the takeoff and landing deck 150 may be provided in parallel to the upper surfaces of the remaining joints, except for the outermost third joint 130, among the plurality of extension joints 110,120,130. Also, or alternatively, the takeoff and landing deck 150 may be integrally provided with the third joint 130, which is the outermost extension joint, or may be manufactured separately and coupled to the third joint 130.

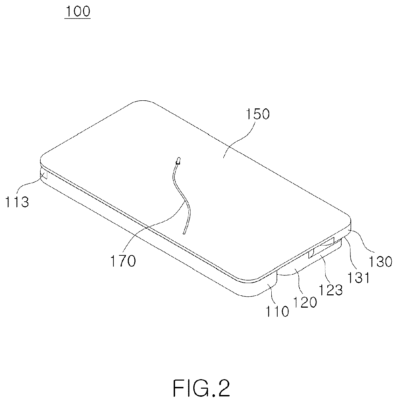

The takeoff and landing deck 150 may move (e.g., rotate) together with movement (rotation) of the third joint 130. The takeoff and landing deck 150 may cover the upper surface of the first to third joints 110, 120, and 130 if the first to third joints 110, 120, and 130 are all folded. If all of the plurality of extension joints 140 are folded, the first to third joints 110, 120, and 130 combined may have a shape corresponding to a shape of the takeoff and landing deck 150. For example, referring to FIGS. 2, 7, and 8, the takeoff and landing deck 150 having a roughly polygonal shape, such as a quadrangular shape (e.g., a polygonal shape with chamfered, rounded, and/or sharp corners). The roughly polygonal shape of the takeoff and landing deck 150 may correspond to a shape in which the first to third joints 110, 120 and 130 are folded and combined, or may be substantially the same size.

The first to third joints 110, 120, and 130 may be unfolded and folded again (e.g., reversibly folded). Also, or alternatively, the first joint 110, the second joint 120, and the third joint 130 may all be provided with the same length, and thus, if the first to third joints are all folded and combined, the joints may be gathered side by side to form a quadrangular shape.

The first and second joints 110 and 120 and the second and third joints 120 and 130 may be connected so as to be capable of relative rotation.

Two adjacent extension joints (for example, first and second joints 110 and 120 and/or second and third joints 120 and 130), among the plurality of extension joints 140, may include a male screw protrusion provided to protrude from one extension joint and a female threaded groove provided on another extension joint and onto which the male screw protrusion is configured to be seated and rotatably coupled.

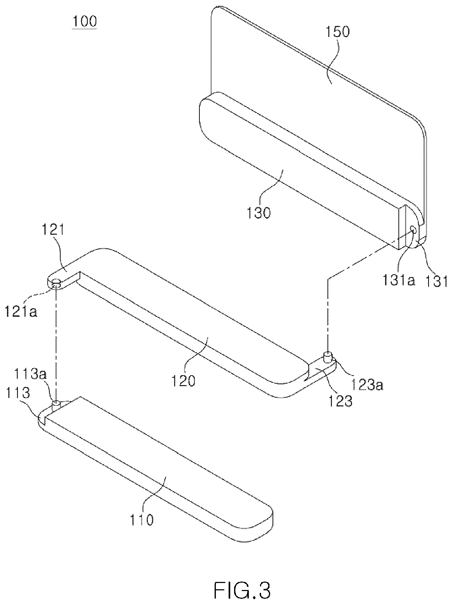

Referring to FIGS. 3 to 5, the first and second joints 110 and 120 may be provided with a female threaded groove 113 and a male screw protrusion 121, respectively, and the second and third joints 120 and 130 may be provided with a male screw protrusion 123 and a female threaded groove 131, respectively. In the drawings, the female threaded grooves and the male screw protrusions are illustrated by specifying the positions thereof for convenience, but the positions of the female threaded grooves and the male screw protrusions may be provided differently from those illustrated in the drawings, and may have various modified structures depending on the designer's intention.

The female threaded grooves 113 and 131 may be provided in a shape where the upper and/or lower surface of the extension joint is partially cut. The thickness of the male screw protrusions 121 and 123 may correspond approximately to a degree of a partial incision in the upper and/or lower surface of the corresponding extension joint 110 or 130, respectively, to form a female threaded groove 113 or 131, respectively. The female threaded groove 113 or 131 may be provided to extend from the corresponding extension joint toward the male screw protrusion 121 or 123..

Also, or alternatively, the male screw protrusions 121 and 123 and the female threaded grooves 113 and 131 may be provided to overlap each other, and the thickness of overlapping of the male screw protrusions 121 and 123 and the female threaded grooves 113 and 131 may be provided to be equal to or smaller than that of the extension joints 110, 120 or 130

Also, or alternatively, since the male screw protrusions 121 and 123 and the female threaded grooves 113 and 131 should be rotatably coupled to each other, one thereof may be provided with protrusions 113a and 123a configured to serve as pivot rotation axes, and the other may be provided with rotation grooves (e.g., holes) 121a and 131a into which the protrusions 113a and 123a may be inserted.

In this example, the moving mechanism 100 should move the mobility apparatus A1 placed on the takeoff and landing deck 150, and thus the takeoff and landing deck 150 should be able to be moved with relatively minimal vibration and minimal impact on the mobility apparatus A1. Also, or alternatively, the second joint 120 should be able to be individually/independently driven with respect to the first joint 110, and the third joint 130 should be able to be individually/independently driven with respect to the second joint 120 (e.g., and the first joint 110), so that the moving mechanism 100 may be controlled diversely and delicately.

The male screw protrusions 121 and 123 and the female threaded grooves 113 and 131 that provide the rotation mechanism may respectively be selectively provided with a driving motor 160 and/or a gearbox 170 which may be individually (e.g., for each corresponding male screw protrusions 121 and 123 and/or female threaded grooves 113 and 131) driven and controlled. The gearbox 170 may be connected to the driving motor 160 (e.g., each gearbox 170 may be connected to a corresponding driving motor 160) the driving motor 160 is driven, power may be transmitted and decelerated in the gearbox 170 to rotate the second joint 120 and/or the third joint 130. The gearbox 170 may serve as a reducer.

The driving motor 160 and the gearbox 170 may also, or alternatively, be separated and provided with two adjacent extension joints. For example, one of the male screw protrusions 121 and 123 and the female threaded grooves 113 and 131 may be provided with the driving motor 160, and the other may be provided with the gearbox 170 connected to the driving motor 160.

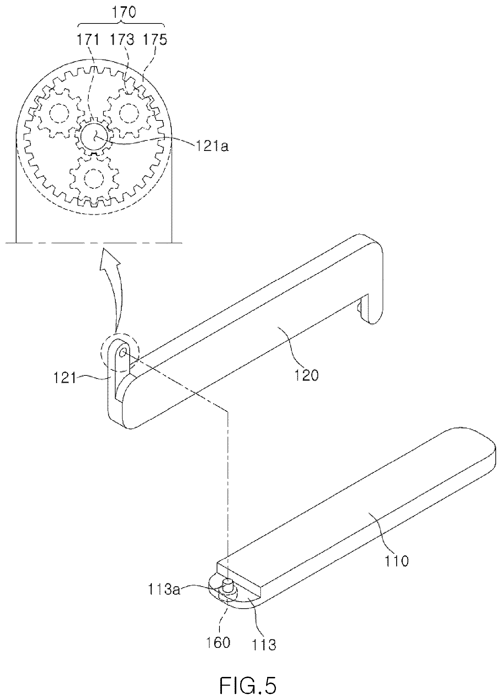

For example, as illustrated in FIG. 5, the gearbox 170 may have a structure in which a sun gear 171, a planet gear 173, and a ring gear 175 are sequentially connected, and the driving motor 160 may be connected to the sun gear 171 (e.g., via the rotating protrusion 113a).

In this case, the rotation axis of the driving motor 160 may be/constitute/be part of the rotating protrusion 113a, the rotation groove 121a (e.g., (hole) may be formed by/in the sun gear 171 of the gearbox 170, the rotating protrusion 113a of the driving motor 160 may be inserted into the rotation groove 121a (e.g., hole) of the sun gear 171 and firmly fixed, and as the driving motor 160 is driven, the sun gear 171 may rotate and the second joint 120 may be unfolded while rotating relative to the first joint 110.

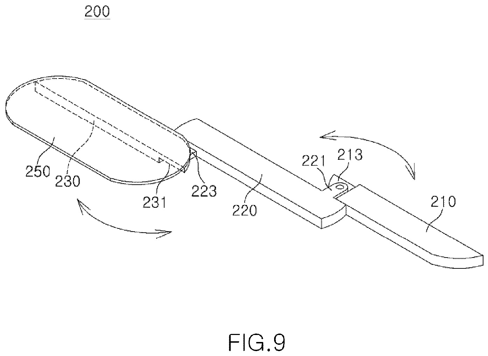

FIGS. 9 to 11 are reference diagrams illustrating a moving mechanism according to other examples. Moving mechanisms 200, 300, and 400 illustrated in FIGS. 9 to 11 have the same configuration as Moving mechanism 100, with the only difference being the shape of the takeoff and landing deck and the extension joint, and thus, the names of the components are all used the same, but only the drawing numbers are assigned differently depending on examples. Hereinafter, the different configurations will be described in detail, and the detailed description of the same configuration will be omitted.

Referring to FIG. 9, a moving mechanism 200 according to another example may be provided with a circular takeoff and landing deck 250. Also, or alternatively, a plurality of extension joints 240 are provided to enable relative rotation, and If the joints are all folded, the joints may be combined into a shape corresponding to the shape of the takeoff and landing deck 250. First to third joints 210, 220, and 230 may be provided in a shape in which a circular shape that is the shape of the takeoff and landing deck 250 is cut. For example, the first joint 210 and the third joint 230 may be provided in the shape of a crescent or old moon, and the second joint 220 in the middle may be provided with the cross-sectional shape of a rugby ball.

Also, or alternatively, two adjacent extension joints, for example, first and second joints 210 and 220 or second and third joints 220 and 230 may optionally be provided with male screw protrusions 221 and 223 and female threaded grooves 213 and 231.

The male screw protrusions 221 and 223 and the female threaded grooves 213 and 231 may be provided to overlap each other, and the thickness of overlapping of the male screw protrusions and the female threaded grooves may be provided to be equal to or smaller than that of the extension joints.

The male screw protrusions 221 and 223 and the female threaded grooves 213 and 231, which provide a rotation mechanism, may respectively be selectively provided with a driving motor and a gearbox that may be individually/independently controlled and driven. The gearbox may be connected to a driving motor, and power may be transmitted according to the driving of the driving motor and decelerated in the gearbox to rotate the second joint 220 or the third joint 230.

Since the control and equipment structures thereof are the same as those described with reference to FIGS. 1 to 8, detailed descriptions are omitted.

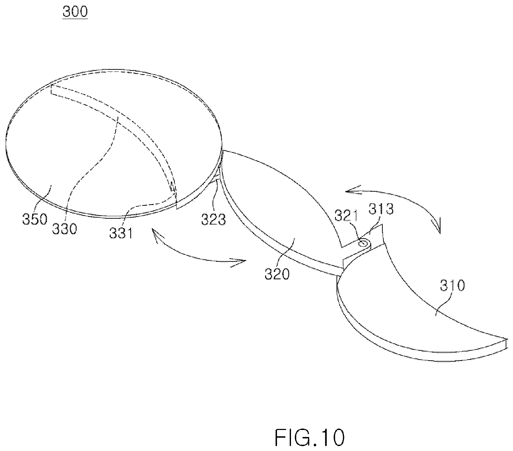

Referring to FIG. 10, a moving mechanism 300 according to another example may be provided with a takeoff and landing deck 350 in the shape of a race track. Also, or alternatively, a plurality of extension joints 340 are provided to be capable of relative rotation, and If the plurality of extension joints 340 are all folded, the joints may be combined into a shape corresponding to the shape of the takeoff and landing deck 350. First to third joints 310, 320, and 330 may be provided in a shape in which the race track shape that is the shape of the takeoff and landing deck 350 is cut.

Also, or alternatively, two adjacent extension joints (for example, first and second joints 310 and 320 or second and third joints 320 and 330) may optionally be provided with male screw protrusions 321 and 323 and female threaded grooves 313 and 331.

The male screw protrusions 321 and 323 and the female threaded grooves 313 and 331 may be provided to overlap each other, and the thickness of overlapping of the male screw protrusions and the female threaded grooves may be provided to be equal to or smaller than that of the extension joints.

The male screw protrusions 321 and 323 and the female threaded grooves 313 and 331, which provide a rotation mechanism, may respectively be optionally equipped with a driving motor and a gearbox which may be individually/independently controlled and driven. The gearbox may be connected to the driving motor, and power may be transmitted according to the driving of the driving motor and decelerated in the gearbox to rotate the second joint 320 or the third joint 330.

Since the control and equipment structures thereof are the same as those described with reference to FIGS. 1 to 8, detailed descriptions are omitted.

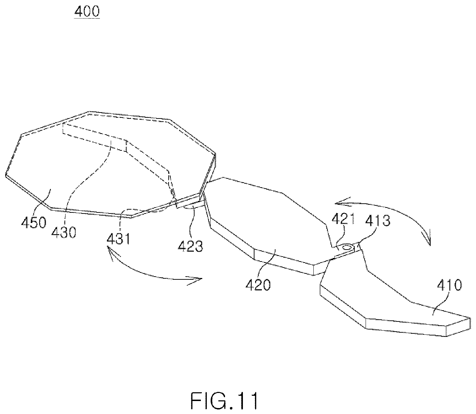

Referring to FIG. 11, a moving mechanism 400 according to another example may be provided with a takeoff and landing deck 450 of a polygonal shape with 5 or more angles, for example, an octagonal shape, or the like. Also, or alternatively, a plurality of extension joints 440 are provided to enable relative rotation, and If the joints are all folded, the joints may be combined into a shape corresponding to the shape of the takeoff and landing deck 450. First to third joints 410, 420, and 430 may be provided in a cut shape of an octagonal shape, which is the shape of the takeoff and landing deck 450.

Also, or alternatively, two adjacent extension joints, for example, first and second joints 410 and 420 or second and third joints 420 and 430, may optionally be provided with male screw protrusions 421 and 423 and female threaded grooves 413 and 431.

The male screw protrusions 421 and 423 and the female threaded grooves 413 and 431 may be provided to overlap each other, and the thickness of overlapping of the male screw protrusions and the female threaded grooves may be provided to be equal to or smaller than that of the extension joints.

The male screw protrusions 421 and 423 and the female threaded grooves 413 and 431 that provide the rotation mechanism may respectively be optionally equipped with a driving motor and a gearbox which may be individually controlled and driven. The gearbox may be connected to the driving motor, and power may be transmitted according to the driving of the driving motor and decelerated in the gearbox to rotate the second joint 420 or the third joint 430.

Since the control and equipment structures thereof are the same as those described with reference to FIGS. 1 to 8, detailed descriptions thereof are omitted.

The present disclosure provides a moving mechanism having a structure in which mobility apparatus taking off and landing at a mobility apparatus stop may be systematically managed and the occurrence of accidents may be fundamentally prevented.

According to an aspect of the present disclosure, a vertiport includes a mobility apparatus stop; and a moving mechanism provided on the mobility apparatus stop. The moving mechanism includes a support rotatably provided on the mobility apparatus stop; a plurality of extension joints connected to the support; and a takeoff and landing deck provided on an outermost extension joint among the plurality of extension joints.

Among the plurality of extension joints, an extension joint coupled to the support may be fixed so as not to rotate.

Among the plurality of extension joints, lower surfaces of remaining extension joints, except for the extension joint coupled to the support, may all be provided in parallel.

Among the plurality of extension joints, the lower surfaces of the remaining extension joints, except for the extension joint coupled to the support, may be provided with moving wheels.

The plurality of extension joints may be all provided with the same length.

A lower surface of the takeoff and landing deck may be provided in parallel to upper surfaces of remaining extension joints except for an outermost extension joint among the plurality of extension joints.

The takeoff and landing deck may have a polygonal shape with four or more angles or a shape in which corners of a polygonal shape with four or more angles are chamfered.

The takeoff and landing deck may have a circular shape or a racetrack shape.

If all of the plurality of extension joints are folded, the plurality of extension joints may be combined into a shape corresponding to a shape of the takeoff and landing deck.

Respective portions in which the plurality of extension joints are connected may be provided with a driving motor, respectively.

The driving motor may be connected to a gearbox, and the gearbox may include a structure in which a sun gear, a planet gear, and a ring gear are sequentially connected.

The driving motor and the gearbox may be provided on two adjacent extension joints, respectively.

Two adjacent extension joints among the plurality of extension joints may include a male screw protrusion provided to protrude from one extension joint, and a female threaded groove provided in another extension joint and on and to which the male screw protrusion is seated and rotationally coupled.

The male screw protrusion and the female threaded groove may be provided to overlap each other, and a thickness of overlapping of the male screw protrusion and the female threaded groove may be equal to or smaller than a thickness of the extension joints.

The mobility apparatus stop may be provided in a building.

The moving mechanism may extend outside of the building.

The takeoff and landing deck may be equipped with a charging device for charging the mobility apparatus.

According to an aspect of the present disclosure, a moving mechanism for a vertiport includes a plurality of extension joints; and a takeoff and landing deck provided on an outermost extension joint among the plurality of extension joints. The plurality of extension joints are provided to be mutually rotatable, and the plurality of extension joints are combined into a shape corresponding to a shape of the takeoff and landing deck If all of the plurality of extension joints are folded.

As set forth above, a moving mechanism according to an example and a vertiport including the same may have a structure that may systematically manage mobility apparatus taking off and landing at a mobility apparatus stop and fundamentally significantly reduce occurrence of accidents.

While example examples have been illustrated and described above, it will be apparent to those skilled in the art that modifications and variations could be made without departing from the scope of the present disclosure as defined by the appended claims.

## Claims

1. A vertiport comprising:
a mobility apparatus stop; and
a moving mechanism provided on the mobility apparatus stop,
wherein the moving mechanism comprises:
a support rotatably connected to the mobility apparatus stop;
a plurality of extension joints connected in series to the support; and
a takeoff and landing deck provided on an outermost extension joint of the plurality of extension joints.

2. The vertiport of claim 1, wherein among the plurality of extension joints, an innermost extension j oint, of the plurality of extension joints, is fixedly coupled to the support so as not to be rotatable relative to the support.

3. The vertiport of claim 2, wherein the plurality of extension joints, except for the innermost extension j oint, comprises at least one lower surface facing and parallel to the support.

4. The vertiport of claim 3, wherein the at least one lower surface is provided with one or more wheels.

5. The vertiport of anyone of claims 1-4, wherein each of the plurality of extension joints are same length.

6. The vertiport of anyone of claims 1-5, wherein each of the plurality of extension joints, except for the outermost extension joint, comprises an upper surface facing and parallel to a lower surface of the takeoff and landing deck.

7. The vertiport of anyone of claims 1-6, wherein the takeoff and landing deck has a polygonal shape with four or more angles forming corners that may be sharp, curved or chamfered.

8. The vertiport of anyone of claims 1-7, wherein the takeoff and landing deck has a circular shape or a racetrack shape.

9. The vertiport of anyone of claims 1-8, wherein when the plurality of extension joints are folded, the plurality of extension joints combined form a shape corresponding to a shape of the takeoff and landing deck.

10. The vertiport of anyone of claims 1-9, wherein each connection between two adjacent extension joints, of the plurality of extension joints, comprise a driving motor.

11. The vertiport of claim 10, wherein the driving motor is connected to a gearbox comprising a sun gear, a planet gear, and a ring gear sequentially connected.

12. The vertiport of claim 11, wherein the driving motor is provided on a first extension joint of the two adjacent extension joints, and the gearbox is provided on a second extension joint of the two adjacent extension joints.

13. The vertiport of anyone of claims 1-12, wherein a first extension joint, of the plurality of extension joints, adjacent to a second extension joint, of the plurality of extension joints, comprises a male screw protrusion protruding therefrom; and
the second extension joint comprises a female threaded groove to which the male screw protrusion is seated and rotationally coupled.

14. The vertiport of claim 13, wherein the male screw protrusion and the female threaded groove overlap with each other, and a thickness of an overlap of the male screw protrusion and the female threaded groove is equal to or smaller than a thickness of the first and second extension joints.

15. A moving mechanism for a vertiport, comprising:
a plurality of extension joints; and
a takeoff and landing deck provided on an outermost extension joint among the plurality of extension joints,
wherein the plurality of extension joints are provided to be mutually rotatable, and
wherein the plurality of extension joints configured to fold to form a combined shape corresponding to a shape of the takeoff and landing deck.
